# EUROPÄISCHE PATENTSCHRIFT

(11) **EP 2 804 883 B1**
(45) Veröffentlichungstag und Bekanntmachung des Hinweises auf die Patenterteilung: **05.10.2016**
(21) Anmeldenummer: 13700230.9
(22) Anmeldetag: 15.01.2013
(51) Int. Cl.: C08G 18/09, C08G 18/32, C08G 18/66, C08G 18/72, C08G 18/73, C08G 18/75, C08G 18/79

(54) **KOMPAKTE, LICHTECHTE POLYURETHANFORMTEILE**
COMPACT, LIGHTFAST POLYURETHANE MOULDED PARTS
PIÈCES MOULÉES EN POLYURÉTHANE COMPACTES ET STABLES À LA LUMIÈRE

(30) Priorität: 17.01.2012 DE 102012200630
(43) Veröffentlichungstag der Anmeldung: 26.11.2014
(73) Patentinhaber: Covestro Deutschland AG, 51373 Leverkusen (DE)
(72) Erfinder: MEYER ZU BERSTENHORST, Birgit, 51375 Leverkusen (DE); HALPAAP, Reinhard, 51519 Odenthal (DE); EISEN, Norbert, 50999 Köln (DE); PFEUFFER, Uwe, 51377 Leverkusen (DE); MURLOWSKI, Gregor, 51109 Köln (DE)
(74) Vertreter: Levpat
(86) Internationale Anmeldenummer: PCT/EP2013/050639
(87) Internationale Veröffentlichungsnummer: WO 2013/107722

(56) Entgegenhaltungen:
- WO-A1-2010/083958
- US-A- 5 502 150

## Beschreibung

Die Erfindung betrifft kompakte, lichtechte Polyurethanformteile aus Isocyanaten, Polyolen und Kettenverlängerern und/oder Vernetzern sowie deren Verwendung.

Polyurethane (PUR) auf der Basis von Isocyanaten mit aromatisch gebundenen NCO-Gruppen neigen unter Lichteinwirkung bekanntlich zu Verfärbungen. Dies ist bei Außenanwendungen oder bei unter Lichteinwirkung stehenden Innenteilen ein Problem. Zur Herstellung von lichtbeständigen Formteilen ist daher eine Oberfläche mit entsprechenden Eigenschaften erforderlich.

Zur Herstellung von Polyurethanen mit hoher Lichtbeständigkeit werden üblicherweise aliphatisch gebundene Isocyanate eingesetzt. Eine Verwendung solcher Isocyanate zur Herstellung lichtbeständiger PUR ist in EP-B 0379246 beschrieben. Hier werden lichtbeständige Deckhäute, z.B. für die Anwendung auf Instrumententafeln hergestellt. Möglich ist die Fertigung von kompakten und geschäumten aliphatischen Häuten.

Gerade bei Anwendungen wie beispielsweise im Automobilinnenraum oder bei Anwendungen, bei denen Polyurethan als Dekorschicht verwendet wird, werden häufig kompakte, unempfindliche, möglichst "unkaputtbare" Systeme (Systeme, die unter verschiedenen Einflüssen nicht zerstört werden) benötigt. Diese sollten eine Shore A Härte von mindestens 70 bevorzugt von mindestens 75 besitzen. Bei der Herstellung derartiger Polyurethane aus Polyol und Polyisocyanat sollten zudem arbeitshygienisch einfach zu verarbeitende Polyisocyanate zum Einsatz kommen.

Aliphatische Isocyanate sind bekanntlich deutlich weniger reaktiv als aromatische, weshalb deutlich mehr Energie der Reaktion zugeführt werden muss. Somit werden häufig Werkzeugtemperaturen von 70-90°C benötigt, um die Reaktion überhaupt starten und zur Durchhärtung bringen zu können. So kommen in den bisher beschriebenen Systemen, wie sie z.B. aus WO 2004/000905, EP-B 0379246, EP-A 0929586 bekannt sind, aliphatische Polyisocyanate mit hohem Anteil an monomerem Diisocyanat zum Einsatz, damit durch eine stark exotherme Reaktion bei Bildung eines hohen Anteils von Urethangruppen ausreichende Aushärtung stattfinden kann. Eine Aushärtung dieser Systeme ist nur durch spezielle Katalyse erreichbar.

Des Weiteren wird ein immer größerer Wert auf Sicherheit in der Produktion gelegt. Dabei ist es erwünscht, mit möglichst wenig Gefahrstoffen umgehen zu müssen, was sowohl gesundheitliche als auch ökonomische Aspekte beinhaltet, da die Sicherheit durch zusätzliche Absaugungen, Einhausungen etc. garantiert werden muss. Daher sind aus arbeitshygienischer Sicht monomerenarme Polyisocyanate den monomeren Diisocyanaten vorzuziehen. Monomere aliphatische Diisocyanate sind in aller Regel als toxische Gefahrstoffe eingestuft und haben einen erheblichen Dampfdruck, so dass bei Verarbeitung von monomerem Diisocyanat dieses in die Arbeitsatmosphäre gelangen kann. Somit sollte aus Sicherheitsgründen mit monomerarmen Systemen gearbeitet werden. Diese Polyisocyanate mit z.B. Uretdion-, Isocyanurat-, Allophanat-, Biuret-, Iminooxadiazindion- und/oder Oxadiazintrionstrukturen und/oder Urethan- und/oder Isocyanatgruppen enthaltenden Umsetzungsprodukten, sogenannte Isocyanat-Prepolymere haben jedoch den Nachteil, dass sie einen deutlich niedrigeren NCO-Gehalt als die Monomere aufweisen, so dass bei der Reaktion zu Polyurethanen deutlich mehr Isocyanatkomponente verwendet werden muss. Bei gleicher Formteildichte wird dadurch das Polyurethan verdünnt, d.h. es finden weniger neue Polyurethanreaktionen statt, als bei Verwendung von Monomeren. Da durch die Polyurethanreaktion Wärme freigesetzt wird, die die Reaktion weiter beschleunigt, sind monomerarme Systeme meist deutlich langsamer/reaktionsträger als Systeme mit hohem Anteil an Monomeren.

Um kompakte, aliphatische Polyurethane herzustellen, wird meist 1-Isocyanato-3,3,5-trimethyl-5isocyanatomethyl-cyclohexan (Isophorondiisocyanat, IPDI) verwendet, das aufgrund seines Cyclohexan-Ringes eine gewisse Steifigkeit besitzt (US-A 4772639). Um IPDI nicht als Monomer einzusetzen, bleibt lediglich die Wahl, es in derivatisierter Form als monomerarmes Polyisocyanat mit beispielsweise Uretdion-, Isocyanurat- und/oder Allophanat-strukturen und/oder als monomerenarmes Isocyanat-Prepolymer zu verwenden. Es ist jedoch bekannt, dass monomerenarme IPDI-Polyisocyanate mit noch relativ hohen NCO-Gehalten, wie z.B. das IPDI-Trimerisat (Isocyanurat) und das IPDI-Dimerisat (Uretdion), bei Raumtemperatur als Feststoff oder in hochviskoser Form vorliegen und diese Produkte somit lösungsmittelfrei schlecht verarbeitbar sind. Üblicherweise werden kompakte PUR-Systeme im RIM-Verfahren (Reaction Injection Molding) verarbeitet. Hierzu sollten sowohl die Isocyanat- als auch die Polyolkomponente jeweils eine Viskosität von max. 30.000 mPas gemessen bei 20 °C aufweisen, um eine gute Vermischung und Verarbeitung bei niedrigen Temperaturen zu ermöglichen.

Vergleicht man die unterschiedlichen Formen von Polyisocyanaten untereinander, wirken sich besonders die Isocyanurat- sowie Iminooxadiazindion- oder Oxadiazintrionstrukturen und die Uretdionstruktur aufgrund der weiteren Ringstruktur positiv auf die Härte aus. Im Gegensatz dazu führen Allophanat- und Biuret-Polyisocyanate zu tendenziell etwas weicheren Polyurethanen. Die Verwendung von Derivaten des linearen 1,6-Diisocyanatohexans (HDI) wirkt sich ebenfalls negativ auf die Härte aus. Polyisocyanat-Verbindungen des HDI's sind jedoch aufgrund ihrer chemischen Struktur deutlich niedrig viskoser als die des IPDI's.

Somit verwundert es nicht, dass kompakte, harte Polyurethane meist unter Verwendung eines IDPI-Isocyanurat / IPDI-Monomer Gemisches im Gewichtsverhältnis von ca. 30:70 hergestellt werden (EP-A 0929586 oder WO 2007/078725). Nachteilig bei diesen Systemen ist jedoch insbesondere der Dampfdruck des enthaltenen monomeren IPDI und der daraus resultierende Aufwand einer arbeitshygienisch einwandfreien Verarbeitung.

Um diesen Nachteil zu vermeiden, würde der Fachmann zu den bekannten monomerenarmen, aliphatischen Polyisocyanaten greifen. Aus den oben genannten Gründen (Abhängigkeit von Reaktivität, Verarbeitbarkeit sowie notwendiger erzielbarer Härte) sind jedoch weder reine HDI-Polyisocyanate noch reine IPDI-Polyisocyanate geeignet. Monomerenarme lösemittelfreie Blends aus Derivaten linearaliphatischer Diisocyanate, wie z. B. HDI, und Derivaten cycloaliphatischer Diisocyanate, wie z. B. IPDI, sind für bestimmte, ausgewählte Anwendungen bereits bekannt.

Monomerenarme Mischungen an sich fester oder sehr hochviskoser (> 100.000 mPas/23 °C) cycloaliphatischer Polyisocyanate mit niedrigviskosen linearaliphatischen Polysiocyanaten sind aus EP-A 0693512 bekannt. Sie werden in Kombination mit lösemittelfreien Polyolen zur Herstellung abriebfester Beschichtungen, insbesondere zur Balkon- und Dachabdichtung verwendet.

Lösemittelfreie Polyisocyanatgemische aus HDI-Polyisocyanaten und Polyisocyanaten aus cycloaliphatischen Diisocyanaten sind auch aus EP-A 1484350 bekannt. Anwendung ist hier die lichtechte Beschichtung von Dekorteilen durch Kombination mit speziellen lösemittelfreien Polyesterpolyolen einer OH-Funktionalität < 3.

Auch in WO 2010/083958 finden Gemische aus Polyisocyanaten, hergestellt aus HDI und hergestellt aus cycloaliphatischen Diisocyanaten, Anwendung zur Herstellung lichtechter kompakter oder geschäumter Polyurethane, insbesondere zur Herstellung von Gießharzen. In dieser Anmeldung werden Polyolkomponenten mit niedrigem Molekulargewicht (< 500 g/mol) beschrieben. Außerdem weist das verwendete Polyisocyanat eine Funktionalität von wenigstens 2,5 auf. Die aus diesen Gemischen erhaltenen Polyurethane erreichen nicht dieselbe Kombination von Härte und Weiterreißfestigkeit wie die erfindungsgemäßen Polyurethane.

Aufgabe der vorliegenden Erfindung war es daher, kompakte, lichtechte Polyurethane/Polyurethanformteile unter Verwendung einer Isocyanat- und einer Polyolkomponente z.B. für den Anwendungsbereich von Armaturentafeln, Türauskleidungen, Armlehnen und Konsolen im Automobilbau zur Verfügung zu stellen, die eine Shore A Härte von mindestens 70, bevorzugt von mindestens 75 aufweisen, wobei die Viskosität der Isocyanatkomponente max. 30.000 mPas (gemessen bei 20 °C) betragen soll, sowie ein Verfahren zu deren Herstellung, wobei Polyisocyanate zum Einsatz kommen, die arbeitshygienisch so verarbeitet werden können, dass während der Verarbeitung und Aushärtung keine flüchtigen Bestandteile in die Umgebungsatmosphäre gelangen.

Diese Aufgabe konnte durch die Bereitstellung der nachfolgend näher beschriebenen Polyurethane bzw. Polyurethanharnstoffe und den daraus hergestellten Formteilen gelöst werden. Entsprechende Formteile konnten überraschend aus monomerarmen (< 0,5 Gew.-% Monomergehalt) aliphatischen Polyisocyanaten mit einer durchschnittlichen NCO-Funktionalität von 2,0 bis 3,2 und gegenüber Isocyanaten reaktiven Kurz- und Langkettern erhalten werden.

Gegenstand der vorliegenden Erfindung sind kompakte, lichtechte Polyurethanformteile mit einer Shore A Härte (gemessen nach DIN 53505 bei 23°C) von mindestens 70, besonders bevorzugt mit einer Shore A Härte (gemessen nach DIN 53505 bei 23°C) von 75 bis 85 erhältlich aus
A) organischen Isocyanatverbindungen mit mindestens zwei aliphatisch gebundenen Isocyanatgruppen,
B) Polyolen mit einem mittleren Molekulargewicht von 1.000 - 15.000 g/mol und einer mittleren Funktionalität von 1,8 bis 8 (Anzahl der OH-Gruppen pro Molekül), vorzugsweise von 2 bis 6,
C) Polyolen und/oder Polyaminen mit einem Molekulargewicht von 60 - 500 g/mol und einer Funktionalität (Anzahl der OH- und/oder NH-Gruppen der Polyole bzw. der Polyamine pro Molekül) von 2 bis 8, vorzugsweise von 2 bis 4, als Kettenverlängerer/Vernetzer,
D) Katalysatoren,
E) gegebenenfalls weiteren Hilfs- und Zusatzstoffen,
dadurch gekennzeichnet, dass Komponente A) einen Gehalt an monomerem Diisocyanat von kleiner 0,5 Gew.-%, bevorzugt kleiner 0,4 Gew,-%, eine Viskosität von max. 30.000 mPas (bei 20°C) (gemessen nach DIN EN ISO 3219), vorzugsweise von max. 25.000 mPas (bei 20°C), besonders bevorzugt von max. 20.000 mPas (bei 20°C) und eine mittlere NCO-Funktionalität von 2,0 bis 3,2, bevorzugt von 2,2 bis 3,0, ganz besonders bevorzugt von 2,2 bis < 2,5 aufweist.

Die Erfindung beruht auf der überraschenden Beobachtung, dass sich bei Kombination an sich bekannter lösemittelfreier Mischungen monomerenarmer niedrigviskoser Polyisocyanate A), insbesondere hergestellt aus linearaliphatischen Diisocyanaten und cycloaliphatischen Diisocyanaten mit Polyolen B) und Polyolen und/oder Polyaminen C) lichtechte Polyurethane mit Shore A-Härten von mindestens 70 herstellen lassen.

Besonders bevorzugt sind ferner kompakte, lichtechte Polyurethanformteile erhältlich aus Mischungen aus 35 bis 95 Gew.-% aus mindestens einem Polyisocyanat a-1) hergestellt aus mindestens einem linearaliphatischen Diisocyanat und mit einem NCO-Gehalt von 10 bis 28 Gew.-% und aus 5 bis 65 Gew.-% aus mindestens einem Polyisocyanat a-2) hergestellt aus mindestens einem cycloaliphatischen Diisocyanat und mit einem NCO-Gehalt von 10 bis 22 Gew.% als organische Isocyanatverbindungen A), wobei in der Polyisocyanatmischung A) mindestens eines der Polyisocyanate a-1) und a-2) eine mittlere NCO-Funktionalität von ≤ 2,6, bevorzugt ≤ 2,5, besonders bevorzugt ≤ 2,4 aufweist und in einer Menge von mindestens 30 Gew.-%, bezogen auf A) vorliegt.

Als Polyisocyanatkomponente a-1) werden vorzugsweise aliphatische Polyisocyanate eingesetzt, die monomerenarme Derivate von monomeren linearaliphatischen Diisocyanaten i-1) sind. Geeignete Ausgangs-Diisocyanate i-1) für diese Derivate a-1) sind beliebige durch Phosgenierung oder nach phosgenfreien Verfahren, beispielsweise durch thermische Urethanspaltung, zugängliche Diisocyanate des Molekulargewichtsbereichs 140 bis 400 mit linearaliphatisch gebundenen Isocyanatgruppen. Als Verbindungen i-1) geeignet sind z. B. 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan oder beliebige Gemische solcher Diisocyanate. Die aus den monomeren aliphatischen Diisocyanaten i-1) hergestellten Derivate a-1) sind nach üblichen bekannten Verfahren hergestellt, weisen Konzentrationen an monomerem Diisocyanat i-1) von kleiner 0,5 Gew.-% auf und enthalten beispielsweise Uretdion-, Isocyanurat-, Allophanat-, Biuret-, Iminooxadiazindion-, Oxadiazintrion- und/oder Carbodiimid-Strukturen, wie sie beispielsweise in J. Prakt. Chem. 336 (1994) 185 - 200, in DE-A 1 670 666 und EP-A 0 798 299 beschrieben sind. Als Polyisocyanate a-1) können auch Urethan- und/oder gegebenenfalls Allophanatgruppen sowie Isocyanatgruppen enthaltende Umsetzungsprodukte, sogenannte Isocyanat-Prepolymere, eingesetzt werden. Die Polyisocyanate a-1) weisen vorzugsweise einen Isocyanatgehalt von 10 bis 28 Gew.-% auf. Bevorzugte, aber nicht ausschließliche Isocyanatkomponenten a-1) sind niederviskose Produkte auf der Basis von HDI mit einem Monomeranteil < 0,5 Gew.%. Besonders bevorzugt werden HDI-Polyisocyanate, die Uretdion-Gruppen enthalten, und/oder HDI-Prepolymere eingesetzt.

Als Polyisocyanatkomponente a-2) werden vorzugsweise cycloaliphatische Polyisocyanate eingesetzt, die monomerenarme Derivate von monomeren aliphatischen Diisocyanaten i-2) sind. Geeignete Ausgangs-Diisocyanate i-2) für diese Derivate a-2) sind beliebige durch Phosgenierung oder nach phosgenfreien Verfahren, beispielsweise durch thermische Urethanspaltung, zugängliche Diisocyanate des Molekulargewichtsbereichs 166 bis 400 mit cycloaliphatisch gebundenen Isocyanatgruppen oder mit Isocyanatomethyl-cycloalkyl-Strukturen. Als Verbindungen i-2) geeignet sind z. B. 1,3- und 1,4-Diisocyanatocyclohexan, 1,3- und 1,4-Bis-(isocyanatomethyl)-cyclohexan (H₆-XDI), 1-Isocyanato-3,3,5-trimethyl-5-isocyanatomethyl-cyclohexan (Isophorondiisocyanat, IPDI), 4,4'-Diisocyanatodicyclohexylmethan (H₁₂-MDI, gegebenenfalls in Mischung mit dem 2,4'-Isomer), 1-Isocyanato-1-methyl-4(3)isocyanato-methylcyclohexan (IMCI), Bis-(isocyanatomethyl)-norbornan (NBDI) oder beliebige Gemische solcher Diisocyanate. Die aus den monomeren aliphatischen Diisocyanaten i-2) hergestellten Derivate a-2) sind nach üblichen bekannten Verfahren hergestellt, weisen Konzentrationen an monomerem Diisocyanat i-2) von kleiner 0,5 Gew.-% auf und enthalten beispielsweise Uretdion-, Isocyanurat-, Allophanat- und/oder Carbodiimidstrukturen. Als Polyisocyanate a-2) können auch Urethan- und/oder gegebenenfalls Allophanat- und Isocyanatgruppen enthaltende Umsetzungsprodukte, sogenannte Isocyanat-Prepolymere, eingesetzt werden. Die Polyisocyanate a-2) weisen vorzugsweise einen Isocyanatgehalt von 10 bis 22 Gew.% auf. Bevorzugte, aber nicht ausschließliche Isocyanatkomponenten a-2) sind solche auf der Basis von IPDI oder H₁₂-MDI mit einem Monomeranteil < 0,5 Gew.-%. Besonders bevorzugt werden IPDI-Polyisocyanate, die Allophanat- und/oder Isocyanurat-Gruppen enthalten eingesetzt.

Die Komponente B) weist eine mittlere Hydroxylfunktionalität von 1,8 bis 8, bevorzugt von 2 bis 6 auf und besteht vorzugsweise aus mindestens einem Polyhydroxypolyether mit einem mittleren Molekulargewicht von 1.000 bis 15.000 g/mol, bevorzugt von 2.000 bis 13.000 g/mol und/oder mindestens einem Oligocarbonatpolyol mit einem mittleren Molekulargewicht von 1.000 - 5.000 g/mol.

Geeignete Polyhydroxypolyether sind die aus der Polyurethanchemie an sich bekannten Alkoxylierungsprodukte von vorzugsweise di- oder trifunktionellen Startermolekülen bzw. Gemischen derartiger Startermoleküle. Geeignete Startermoleküle sind beispielsweise Wasser, Ethylenglykol, Diethylenglykol, Propylenglykol, Trimethylolpropan (TMP), Glycerin und Sorbit. Zur Alkoxylierung eingesetzte Alkylenoxide sind insbesondere Propylenoxid (PO) und Ethylenoxid (EO), wobei diese Alkylenoxide in beliebiger Reihenfolge und/oder als Gemisch zum Einsatz gelangen können. Ferner können als Komponente B) auch aliphatische Oligocarbonatpolyole, bevorzugt -diole mit einem mittleren Molekulargewicht von 1.000 bis 5.000 g/mol, bevorzugt von 1.000 bis 2.000 g/mol verwendet werden. Geeignete aliphatische Oligocarbonatpolyole sind die an sich bekannten Umesterungsprodukte von monomeren Dialkylcarbonaten wie z.B. Dimethylcarbonat, Diethylcarbonat etc. mit Polyolen oder Mischungen von Polyolen mit einer OH-Funktionalität ≥ 2,0 wie z.B. 1,4-Butandiol, 1,3-Butandiol, 1,5-Pentandiol, 1,6-Hexandiol, 3-Methyl-1,5-pentandiol, 1,12-Dodecandiol, Cyclohexandimethanol, Trimethylolpropan und/oder Mischungen der genannten Polyole mit Lactonen, wie es beispielhaft in EP-A 1 404 740 und EP-A 1518 879 beschrieben ist. Eingesetzt werden können auch Polyethercarbonatpolyole, wie sie beispielsweise durch katalytische Umsetzung von Alkylenoxiden (Epoxiden) und Kohlendioxid in Anwesenheit von H-funktionellen Startersubstanzen erhältlich sind (siehe z.B. EP-A 2046861). Diese Polyethercarbonatpolyole haben im allgemeinen eine Funktionalität von mindestens 1, bevorzugt von 2 bis 8, besonders bevorzugt von 2 bis 6 und ganz besonders bevorzugt von 2 bis 4. Das Molekulargewicht beträgt bevorzugt 400 bis 10.000 g/mol und besonders bevorzugt 500 bis 6.000 g/mol.

Bei der Komponente C) handelt es sich bevorzugt um difunktionelle Kettenverlängerungsmittel mit einem Molekulargewicht von 60 bis 500 g/mol, vorzugsweise 60 bis 400 g/mol. Zu den bevorzugten Kettenverlängerungsmitteln C) gehören zweiwertige Alkohole, wie beispielsweise Ethylenglykol, Diethylenglykol, 1,4-Butandiol, 1,6-Hexandiol oder Gemische derartiger Diole. Als Komponente C) bzw. als Teil der Komponente C) ebenfalls geeignet sind Ethergruppen aufweisende Diole mit Molekulargewichten von unter 500 g/mol, vorzugsweise unter 400 g/mol, wie sie durch Propoxylierung und/oder Ethoxylierung von zweiwertigen Startermolekülen der bereits oben beispielhaft genannten Art zugänglich sind. Als Kettenverlängerungsmittel C) ebenfalls geeignet sind Diamine wie z.B. Ethylendiamin oder bevorzugt solche mit arylalkylständigen Aminogruppen, wie z.B. 1,3-Xylylendiamin. Desweiteren als Komponente C) geeignet sind Aminoalkohole wie beispielweise Ethanolamin, Diethanolamin oder Triethanolamin. Ferner können auch Polycarbonatdiole verwendet werden, sofern ihr Molekulargewicht unterhalb 500 g/mol liegt. Beliebige Gemische der beispielhaft genannten Kettenverlängerungsmittel können ebenfalls eingesetzt werden. Die Kettenverlängerungsmittel C) werden bevorzugt in Mengen von 2 bis 15, vorzugsweise von 4 bis 12 Gew.-%, bezogen auf das Gewicht der Summe der Komponenten B), C), D) und E), eingesetzt.

Als Katalysatoren D) können die für Polyurethan gängigen, bekannten Katalysatoren verwendet werden, die beispielsweise in WO 2008/034884 oder EP-A 0929586 aufgeführt sind. Dazu zählen sowohl Salze und Chelate von Zinn, Zink, Bismut, Eisen, Quecksilber als auch tertiäre Aminverbindungen. Organozinnverbindungen wie beispielsweise Dimethylzinn(IV)didodecylmercaptid, Dimethylzinn(IV)bis(2-ethylhexylthioglycolat), Dimethylzinn(IV)dimethylenisooctylestermercaptid, Dimethylzinn(IV)didecylmercaptid, Dimethylzinn(IV)butenyldicarboxylat, Dimethylzinn(IV)dilaurat und Dimethylzinn(IV)di-(neo-decylcarboxylat) werden bevorzugt verwendet. Bevorzugt sollten nicht fungitive Katalysatoren eingesetzt werden.

Als gegebenenfalls mit zu verwendende Hilfs- und Zusatzmittel E) werden Verbindungen der an sich bekannten Art verwendet. Dies sind die bei der Herstellung von Polyurethanen üblichen und bekannten Verbindungen, wie z.B. Stabilisatoren, Pigmente, Füllstoffe oder auch Wasser, welches gegebenenfalls in einer Menge von bis zu 0,3 Gew.-%, bezogen auf das Gewicht der Komponente B), mit verwendet wird. Vorzugsweise wird die Herstellung der PUR jedoch ohne zugesetztes Wasser durchgeführt.

Unter Stabilisatoren werden sowohl UV-Absorber, Antioxidantien, Radikalfänger als auch Schaumstabilisatoren verstanden. UV-Absorber können sowohl anorganische Verbindungen wie beispielsweise Titandioxid, Zinkoxid oder Cerdioxid sein, als auch organische Verbindungen, wie 2-Hydroxy-benzophenone, 2-(2-Hydroxyphenyl)benzotriazole, 2-(2-Hydroxyphenyl)-1,3,5-triazine, 2-Cyanacrylate und Oxalanilide. Zu den Radikalfängern zählen bekanntermaßen HALS - Systeme (Hindered Amine Light Stabilizer), als Antioxidatien können sterisch gehinderte Phenole und/oder sekundäre aromatische Amine verwendet werden. Schaumstabilisatoren bestehen meist aus Polyethersiloxanen oder Blockcopolymeren von Polyoxyalkylenen.

Unter Pigmenten und Füllstoffen werden z.B. Calciumcarbonat, Graphit, Ruß, Titandioxid, Eisenoxid, Wollastonit, Glassfasern, Kohlefasern und/oder auch organische Farbstoffe bzw. Füllstoffe verstanden.

Weitere Beispiele für die Komponente E) "Hilfs- und Zusatzstoffe" werden in "Kunststoffhandbuch 7 - Polyurethanes", Becker/Braun, Carl Hanser Verlag, Müchen / Wien, 1993, 104ff aufgeführt.

Die Ausgangskomponenten werden im Übrigen in solchen Mengen eingesetzt, dass eine Isocyanat-Kennzahl von 80 bis 120, vorzugsweise 95 bis 105, eingehalten wird. Unter Isocyanat-Kennzahl versteht man den Quotienten aus der Anzahl der NCO-Gruppen geteilt durch die Anzahl der NCOreaktiven Gruppen multipliziert mit 100.

Zur Herstellung der PUR werden im Allgemeinen die Komponenten B) bis E) zu einer "Polyolkomponente" vereinigt, die dann mit der Polyisocyanatkomponente A) vermischt und in geschlossenen Formen zur Reaktion gebracht werden. Hierbei bedient man sich üblicher Mess- und Dosiervorrichtungen.

Die erfindungsgemäßen Formteile werden beispielsweise als Lenkräder oder Türseitenverkleidungen sowie Instrumententafelabdeckungen oder allgemein als Dekorblenden im Autoinnenraum verwendet. Die erfindungsgemäßen Formteile eignen sich als Verkleidung für Armaturentafeln, Konsolen, Verkleidungen von Türen oder Ablagen im Bereich von Fahrzeugen. Weitere Anwendungsbereiche können sein: Autoscheibenummantelungen, Fensterummantelungen, Solarmodulummantelungen, Tischkantenummantelungen, Ummantelung von Metallträgern bzw. Metalleinlegern für z.B. Windshots und Kabel, Die Formteile können durch RIM-Verfahren oder auch durch direktes Auftragen auf andere Träger aus z.B. Polycarbonat, Polycarbonat-Blends, aromatischen Polyurethanen oder anderen Spritzguss-Kunststoffen im DirectSkinning-Verfahren hergestellt werden.

Die Temperatur der Reaktionskomponenten (Polyisocyanatkomponente A) bzw. "Polyolkomponente" bestehend aus den Komponenten B), C), D) und E)) bei Herstellung der Polyurethane liegt im Allgemeinen innerhalb des Temperaturbereichs von 20 bis 60°C. Die Temperatur der Formwerkzeuge liegt im Allgemeinen bei 20 bis 100°C, bevorzugt bei 50 bis 90°C.

Die Menge des in die Form eingetragenen Reaktivgemisches aus den Komponenten A) bis E) wird so bemessen, dass Rohdichten der Formteile von 750 bis 1.200 kg/m³, bevorzugt 900 bis 1.150 kg/m³ resultieren.

Die Erfindung soll anhand der nachfolgenden Beispiele näher erläutert werden.

### Beispiele

Alle Prozentangaben (Zusammensetzungen) beziehen sich, sofern nicht anders vermerkt, auf das Gewicht.

Die Bestimmung der NCO-Gehalte erfolgte titrimetrisch nach DIN EN ISO 11909, Angabe in Gew.%.

Die NCO-Funktionalitäten wurden aus GPC-Messung (Gelpermeationschromatogramm) und NCO-Gehalt berechnet.

OH-Zahlen wurden titrimetrisch in Anlehnung an DIN 53240 T.2 bestimmt.

Die Rest-Monomeren Gehalte wurden nach DIN EN ISO 10283 gaschromatographisch mit internem Standard gemessen.

Die Viskositätsmessungen erfolgten mit einem Physica MCR 51 Rheometer der Fa. Anton Paar Germany GmbH (DE) nach DIN EN ISO 3219 (1994), sofern nicht anders angegeben. Durch Messungen bei unterschiedlichen Schergeschwindigkeiten wurde sichergestellt, dass das Fließverhalten der beschriebenen Polyisocyanatmischungen dem idealer Newtonscher Flüssigkeiten entspricht. Auf die Angabe der Schergeschwindigkeit wird deshalb abweichend von der Norm verzichtet.

Shore-Härten wurden nach DIN 53505 bei 23°C mit Hilfe eines Shore-Härteprüfgerätes Zwick 3100 (Fa. Zwick, DE) gemessen.

Der Zugversuch wurde an einer Z020 der Firma Zwick nach DIN 53504 / ISO 37 durchgeführt.

Die Weiterreißfestigkeit wurde ebenfalls an einer Z020 der Firma Zwick nach DIN ISO 34 gemessen.

### Polyisocyanate a-1)

### Polyisocyanat A1):

Isocyanurat- und Uretdiongruppen enthaltendes HDI-Polyisocyanat wurde durch Tributylphosphinkatalysierte Oligomerisierung von HDI in Anlehnung an Beispiel 1a) der EP-A 0 377 177 mit der Änderung, dass kein 2,2,4-Trimethyl-1,3-pentandiol mitverwendet wurde, hergestellt. Die Reaktion wurde bei einem NCO-Gehalt der Rohlösung von 42 % abgebrochen und nicht umgesetztes HDI durch Dünnschichtdestillation bei einer Temperatur von 130°C und einem Druck von 0,2 mbar entfernt.

| | |
|---|---|
| NCO-Gehalt: | 22,7% |
| NCO-Funktionalität: | 2,2 |
| monomeres HDI: | 0,3 % |
| Viskosität (23°C): | 90 mPas |

### Polyisocyanat A2):

Isocyanurat- und Uretdiongruppen enthaltendes HDI-Polyisocyanat wurde durch Tributylphosphinkatalysierte Oligomerisierung von HDI gemäß Beispiel 2) der EP-A 0377177 hergestellt. Nach Abtrennung des überschüssigen monomeren HDI durch Dünnschichtdestillation wurde ein Polyisocyanat mit folgenden Kenndaten erhalten:

| | |
|---|---|
| NCO-Gehalt: | 22,5 % |
| NCO-Funktionalität: | 2,5 |
| monomeres HDI: | 0,3 % |
| Viskosität (23°C): | 170 mPas |

### Polyisocyanat A3):

Ein Isocyanuratgruppen-aufweisendes HDI-Polyisocyanat A3) wurde gemäß EP-A 0330966, Beispiel 11 hergestellt, wobei 2-Ethylhexanol statt 2-Ethyl-1,3-hexandiol als Katalysatorlösemittel eingesetzt wurde. Nach Abtrennung des überschüssigen monomeren HDI mittels Dünnschichtdestillation wurde ein HDI-Polyisocyanat mit folgenden Kenndaten erhalten:

| | |
|---|---|
| NCO-Gehalt: | 22,9 % |
| NCO-Funktionalität: | 3,1 |
| monomeres HDI: | 0,1 % |
| Viskosität (23°C): | 1.200 mPas |

### Polyisocyanat A4):

7 mol 1,6-Diisocyanatohexan (HDI) und 1 mol eines Polypropylenoxiddiols mit einem mittleren Molgewicht von 400 (OH-Zahl = 280) wurden bei 80 °C bis zum Erreichen eines konstanten NCO-Gehalts umgesetzt. Nachfolgend wurde der Überschuss an monomerem HDI durch Dünnschichtdestillation bei einer Temperatur von 130 °C und einem Druck von ca. 0,5 mbar entfernt.

| | |
|---|---|
| NCO-Gehalt: | 12,6 % |
| NCO-Funktionalität: | 2,0 |
| monomeres HDI: | 0,2 % |
| Viskosität (23°C): | 4.250 mPas |

### Polyisocyanate a-2)

### Polyisocyanat A5):

4000 g IPDI wurden bei 40 °C im Vakuum entgast und unter N₂-Atmosphäre portionsweise mit 25 g einer 5 Gew.-%-igen Lösung von Trimethyl-benzylammonium-hydroxid in n-Butanol/Methanol (9:1) versetzt und bei 70 °C so lange umgesetzt, bis ein NCO-Gehalt von 30 % erreicht war. Die Umsetzung wurde durch Zugabe von 5 g einer 25 Gew.-%-igen Lösung von Phosphorsäuredibutylester in IPDI abgestoppt und 1h bei 60 °C nachgerührt. Monomeres IPDI wurde anschließend durch Destillation mittels eines Dünnschichtverdampfers bei 180 - 190 °C und 0,2 mbar abgetrennt, wobei 1600 g eines Festharzes (bei Raumtemperatur) mit folgenden Kenndaten erhalten wurde:

| | |
|---|---|
| NCO-Gehalt: | 16,7 % |
| NCO-Funktionalität: | 3,3 |
| monomeres IPDI: | 0,35 % |
| Viskosität (140 °C): | 17.000 mPas |

### Polyisocyanat A6):

10 mol (2222 g) Isophorondiisocyanat (IPDI) wurden mit einer Mischung aus 0,55 mol (40,7 g) n-Butanol und 0,45 mol (39,6 g) 1-Pentanol bei 100 °C bis zum Erreichen des berechneten NCO-Gehalts von 34,7 % umgesetzt. Zur anschließenden Trimerisierung/Allophanatisierung wurde bei 95 °C eine 5%-ige Lösung (ca. 5 g) von Trimethyl-benzylammoniumhydroxid gelöst in 2-Ethylhexanol als Katalysator so zugetropft, dass nach ca. 1,5 h ein NCO-Gehalt der Lösung von 28,5-29 % erreicht wurde. Die Umsetzung wurde durch Zugabe einer 25 %-igen in IPDI gelösten Dibutylphosphat-Lösung (ca. 0,6 g) abgestoppt. Es wurde 1 h bei 120 °C nachgerührt. Nachfolgend wurde der Überschuss an monomerem IPDI durch Dünnschichtdestillation bei einer Temperatur von 150 °C und einem Druck von ca. 0,5 mbar entfernt. Es wurde ein Festharz (bei Raumtemperatur) mit folgenden Kenndaten erhalten:

| | |
|---|---|
| NCO-Gehalt: | 15,0 % |
| NCO-Funktionalität: | 2,4 |
| monomeres IPDI: | 0,4 % |
| Viskosität (100 °C): | 17.000 mPas |

### Polyisocyanat A7):

Isophorondiisocyanat (IPDI) wurde entsprechend Beispiel 2 der EP-A0003765 bis zu einem NCO-Gehalt von 31,1 % trimerisiert. Man erhielt eine Mischung aus IPDI-Trimer/IPDI-Monomer mit den folgenden Kenndaten:

| | |
|---|---|
| NCO-Gehalt: | 31,1 % |
| NCO-Funktionalität: | 2,2 |
| Viskosität (23 °C): | 240 mPas |

### Polyisocyanat I (Vergleich):

Niedrigviskoses IPDI-Trimer/IPDI-Monomer Gemisch Polyisocyanat A7). Viskosität bei 20°C nach DIN 53019 ca. 350 mPas, NCO-Funktionalität ca. 2,2

### Polyisocyanat II (Vergleich):

Gemisch aus 50 Gew.-Teilen Polyisocyanat A4) und 50 Gew.-Teilen Polyisocyanat A1). Viskosität bei 20°C nach DIN 53019 ca. 420 mPas, NCO-Funktionalität ca. 2,1

### Polyisocyanat III:

Gemisch aus 60 Gew.-Teilen Polyisocyanat A6) und 40 Gew.-Teilen Polyisocyanat A1). Viskosität bei 20°C nach DIN 53019 ca. 24.480 mPas, NCO-Funktionalität ca. 2,3

### Polyisocyanat IV:

Gemisch aus 15 Gew.-Teilen Polyisocyanat A5), 35 Gew.-Teilen Polyisocyanat A3) und 50 Gew.-Teilen Polyisocyanat A4). Viskosität bei 20°C nach DIN 53019 ca. 10.200 mPas, NCO-Gehalt 16,8 %, NCO-Funktionalität ca. 2,7.

### Polyisocyanat V:

Gemisch aus 31,5 Gew.-Teilen Polyisocyanat A5), 33,5 Gew.-Teilen Polyisocyanat A2) und 35 Gew.-Teilen Polyisocyanat A3). Viskosität bei 20°C nach DIN 53019 ca. 11.610 mPas, NCO-Gehalt 20,8 %, NCO-Funktionalität ca. 2,9.

### Polyol:

Polyetherpolyol mit einer OH-Zahl von 28; hergestellt durch Alkoxylierung von Sorbit mit Propylenoxid/Ethylenoxid (PO/EO) im Gewichtsverhältnis 82:18 und überwiegend primären OH-Endgruppen.

In der nachstehenden Tabelle 1 werden die Komponenten und deren eingesetzte Mengen für die Herstellung des Polyurethanes beschrieben.

**Tabelle 1: Zusammensetzungen**

| **Beispiel** | **1** | **2** | **3*** | **4*** | **5*** | **Komponente** |
|---|---|---|---|---|---|---|
| Polyol | 86,0 | 86,0 | 86,0 | 86,0 | 86,0 | B |
| Isophorondiamin (Kettenverlängerer) | 1,50 | 1,50 | 1,50 | 1,50 | 1,50 | C |
| Fomrez UL22 (Katalysator); der Firma Momentive Performance Materials | 0,1 | 0,1 | 0,1 | 0,1 | 0,1 | D |
| Fomrez UL28 (Katalysator); der Firma Momentive Performance Materials | 0,3 | 0,3 | 0,3 | 0,3 | 0,3 | D |
| 1,4-Butandiol | 7,4 | 7,4 | 7,4 | 7,4 | 7,4 | C |
| Diethanolamin | 2,0 | 2,0 | 2,0 | 2,0 | 2,0 | C |
| Ethanolamin | 2,50 | 2,50 | 2,50 | 2,50 | 2,50 | C |
| Irganox 1076 (Antioxidant) | 1,50 | 1,50 | 1,50 | 1,50 | 1,50 | E |
| Isocyanat I | 47,8 | - | - | - | - | A |
| Isocyanat II | - | 82,9 | - | - | - | A |
| Isocyanat III | - | - | 81,5 | - | - | A |
| Isocyanat IV | - | - | - | 90,9 | - | A |
| Isocyanat V | - | - | - | - | 75,4 | A |

| | | | | | | |
|---|---|---|---|---|---|---|
| * erfindungsgemäß | | | | | | |

**Tabelle 2: Eigenschaften**

| **Beispiel** | **1** | **2** | **3*** | **4*** | **5*** |
|---|---|---|---|---|---|
| Formteildichte [kg/m³] | 1017 | 1020 | 990 | 1120 | 1120 |
| Typ | Monomerhaltig | Monomerenarm | Monomerenarm | Monomerenarm | Monomerenarm |
| Startzeit [s] | 20 | 18 | 21 | 16 | 15 |
| Abbindezeit [s] | 25 | 20 | 25 | 19 | 17 |
| Shore A | 86 | 61 | 83 | 77 | 79 |
| Weiterreißfestigkeit [kN/m] | 10 | - | 13 | 5 | 4 |
| Zugfestigkeit [N/mm²] | 5,2 | - | 4,7 | 8,7 | 3,4 |

| | | | | | |
|---|---|---|---|---|---|
| *erfindungsgemäß | | | | | |

Die Formtemperatur betrug in den Versuchen 70°C, die Formgröße betrug 100 x 100 x 20 mm³.

Die Temperatur der eingesetzten Komponenten lag sowohl für das Isocyanat als auch für die Polyolformulierung bei 25°C.

Die Menge, die in die Form eingefüllt wurde, war so bemessen, dass die angegebene Rohdichte resultierte.

Versuch 1 ist ein Vergleichsversuch, bei dem eine große Menge an Isocyanat-Monomer und lediglich IPDI-Verbindungen eingesetzt wurden. Das eingesetzte Polyisocyanat I war sehr niedrigviskos, und das Formteil konnte innerhalb kürzester Zeit mit einer Shore A von 86 hergestellt werden. Ein erheblicher Nachteil bestand allerdings darin, dass beim Versuch 1 mit grossen Mengen niedermolekularer monomerer aliphatischer Diisocyanate gearbeitet werden musste, die als giftige, sensibilisierende und reizende Arbeitsstoffe eingestuft sind und zum Teil einen hohen Dampfdruck aufweisen. Die Verarbeitung dieser monomere Diisocyanate enthaltenden Mischung erforderte aus Gründen der Arbeitshygiene einen großen sicherheitstechnischen Aufwand. Darüber hinaus besteht die Gefahr, dass insbesondere bei Verwendung eines Polyisocyanatüberschusses nicht abreagiertes monomeres Diisocyanat für längere Zeit im Bauteil verbleibt und aus diesem langsam ausdampfen kann.

Im Unterschied dazu ist beim Einsatz der erfindungsgemäß einzusetzenden Polyisocyanate (Beispiele 3, 4 und 5) und im Vergleichsversuch 2, in dem auch monomerarme Polyisocyanate eingesetzt wurden, die Verarbeitung deutlich einfacher. Die verwendeten Polyisocyanate weisen einen niedrigen Dampfdruck auf, so dass die Umgebungsluft bei der Verarbeitung nicht mit monomerem Diisocyanat belastet ist. Aus dem fertigen Bauteil kann daher nahezu kein monomeres Diisocyanat ausdampfen. In der Reaktivität ähneln diese Systeme dem System aus Vergleichsbeispiel1; die Systeme des Vergleichsversuchs 2 und der Versuche 4 und 5 sind sogar etwas reaktiver. Man erkennt jedoch auch, dass das System in Vergleichsversuch 2, das lediglich auf Basis von HDI aufgebaut ist, nur eine recht niedrige Shore A Härte besitzt und damit verhältnismäßig weich ist. Somit scheinen reine HDI-Polyisocyanate für kompakte, relativ harte Polyurethanbauteile auf Basis von aliphatischen, monomerarmen Polyisocyanaten wenig geeignet zu sein.

Ansonsten zeigt sich, dass bei der Verwendung des Systems in Beispiel 3 darüber hinaus eine bessere Weiterreißfestigkeit und bei der Verwendung des Systems in Beispiel 4 eine bessere Zugfestigkeit als beim System im Vergleichsbeispiel 1 erzielt wird.

## Patentansprüche

1. Kompakte, lichtechte Polyurethanformteile mit einer Shore A Härte gemessen nach DIN 53505 von mindestens 70 erhältlich aus
A) organischen Isocyanatverbindungen mit mindestens zwei aliphatisch gebundenen Isocyanatgruppen,
B) Polyolen mit einem mittleren Molekulargewicht von 1.000 - 15.000 g/mol und einer mittleren Funktionalität von 1,8 bis 8,
C) Polyolen und/oder Polyaminen mit einem Molekulargewicht von 60 - 500 g/mol und einer Funktionalität von 2 bis 8 als Kettenverlängerer/Vernetzer,
D) Katalysatoren,
E) gegebenenfalls weiteren Hilfs- und Zusatzstoffen,
**dadurch gekennzeichnet, dass** Komponente A) einen Gehalt an monomerem Diisocyanat von kleiner 0,5 Gew.-%, eine Viskosität gemessen nach DIN EN ISO 3219 von max. 30.000 mPas bei 20 °C und eine mittlere NCO-Funktionalität von 2,2 bis < 2,5 aufweist und es sich bei den organischen Isocyanatverbindungen A) um Mischungen aus 35 bis 95 Gew.-% aus mindestens einem Polyisocyanat a-1) hergestellt aus mindestens einem linearaliphatischen Diisocyanat und mit einem NCO-Gehalt von 10 bis 28 Gew.-% und aus 5 bis 65 Gew.-% aus mindestens einem Polyisocyanat a-2) hergestellt aus mindestens einem cycloaliphatischen Diisocyanat und mit einem NCO-Gehalt von 10 bis 22 Gew.-% handelt und dass in der Polyisocyanatmischung mindestens eines der Polyisocyanate a-1) und a-2) eine mittlere NCO-Funktionalität von ≤ 2,6 aufweist und in einer Menge von mindestens 30 Gew.-%, bezogen auf A) vorliegt.

2. Kompakte, lichtechte Polyurethanformteile gemäß Anspruch 1, **dadurch gekennzeichnet, dass** die Polyole B) eine mittlere Funktionalität von 2 bis 6 aufweisen.

3. Kompakte, lichtechte Polyurethanformteile gemäß Anspruch 1, **dadurch gekennzeichnet, dass** die Polyole und/oder Polyamine C) als Kettenverlängerer/Vernetzer eine Funktionalität von 2 bis 4 aufweisen.

4. Kompakte, lichtechte Polyurethanformteile gemäß Anspruch 1 mit einer Shore A Härte gemessen nach DIN 53505 von 75 bis 85.

5. Kompakte, lichtechte Polyurethanformteile gemäß Anspruch 1, **dadurch gekennzeichnet, dass** in der Polyisocyanatmischung A) mindestens eines der Polyisocyanate a-1) und a-2) eine mittlere Funktionalität von ≤ 2,5 aufweist.

6. Kompakte, lichtechte Polyurethanformteile gemäß Anspruch 1, **dadurch gekennzeichnet, dass** in der Polyisocyanatmischung A) mindestens eines der Polyisocyanate a-1) und a-2) eine mittlere Funktionalität von ≤ 2,4 aufweist.

7. Verwendung der Formteile gemäß den Ansprüchen 1 bis 6 als Verkleidung für Armaturentafeln und Konsolen, als Verkleidung von Türen und Ablagen im Bereich von Fahrzeugen, als Autoscheibenummantelungen, Fensterummantelungen, Solarmodulummantelungen, Tischkantenummantelungen und Ummantelung von Metallträgern bzw. Metalleinlegern.

8. Verfahren zur Herstellung der Formteile gemäß den Ansprüchen 1 bis 6 durch RIM (Reaction Injection Molding)-Verfahren oder durch direktes Auftragen der Mischung aus den Komponenten A) bis E) auf Trägern aus Polycarbonat, Polycarbonat-Blends, aromatischen Polyurethanen oder Spritzguss-Kunststoffen im DirectSkinning-Verfahren.

## Claims

1. Compact, lightfast polyurethane moldings with Shore A hardness (measured in accordance with DIN 53505) of at least 70 obtainable from
A) organic isocyanate compounds having at least two aliphatically bonded isocyanate groups,
B) polyols having an average molar mass of from 1000 to 15 000 g/mol and an average functionality of from 1.8 to 8,
C) polyols and/or polyamines having a molar mass of from 60 to 500 g/mol and having a functionality of from 2 to 8 as chain extenders/crosslinking agents,
D) catalysts,
E) optionally other auxiliaries and additives,
**characterized in that** component A) has less than 0.5% by weight content of monomeric diisocyanate, a viscosity (measured in accordance with DIN EN ISO 3219) of at most 30 000 mPas (at 20°C), and an average NCO functionality of from 2.2 to < 2.5 and the organic isocyanate compounds A) are mixtures of from 35 to 95% by weight of at least one polyisocyanate a-1) produced from at least one linear aliphatic diisocyanate and having an NCO content of from 10 to 28% by weight and of from 5 to 65% by weight of at least one polyisocyanate a-2) produced from at least one cycloaliphatic diisocyanate and having an NCO content of from 10 to 22% by weight, and that in the polyisocyanate mixture at least one of the polyisocyanates a-1) and a-2) has an average NCO functionality of ≤ 2.6 and is present in an amount of at least 30% by weight, based on A).

2. Compact, lightfast polyurethane moldings according to Claim 1, **characterized in that** the polyols B) have an average functionality of from 2 to 6.

3. Compact, lightfast polyurethane moldings according to Claim 1, **characterized in that** the polyols and/or polyamines C) as chain extenders/crosslinking agents have a functionality of from 2 to 4.

4. Compact, lightfast polyurethane moldings according to Claim 1 with Shore A hardness (measured in accordance with DIN 53505) of from 75 to 85.

5. Compact, lightfast polyurethane moldings according to Claim 1, **characterized in that** in the polyisocyanate mixture A) at least one of the polyisocyanates a-1) and a-2) has an average functionality of ≤ 2.5.

6. Compact, lightfast polyurethane moldings according to Claim 1, **characterized in that** in the polyisocyanate mixture A) at least one of the polyisocyanates a-1) and a-2) has an average functionality of ≤ 2.4.

7. Use of the moldings according to Claims 1 to 6 as cladding for dashboards and consoles, as cladding of doors and parcel shelves in the vehicle sector, as materials surrounding automobile windows, materials surrounding other windows, materials surrounding solar modules, materials surrounding worktop edges, and materials surrounding metal supports and, respectively, metal inserts.

8. Process for the production of the moldings according to Claims 1 to 6 by RIM (Reaction Injection Molding) processes or by direct application of the mixture of components A) to E) to supports made of polycarbonate, of polycarbonate blends, of aromatic polyurethanes, or of injection-molding plastics in the direct-skinning process.

## Revendications

1. Pièces façonnées compactes, résistant à la lumière, en polyuréthane, présentant une dureté Shore A, mesurée selon la norme DIN 53505, d'au moins 70, pouvant être obtenues à partir
A) de composés organiques à fonctionnalité isocyanate, présentant au moins deux groupes isocyanate liés de manière aliphatique,
B) de polyols présentant un poids moléculaire de 1000-15.000 g/mole et une fonctionnalité moyenne de 1,8 à 8,
C) de polyols et/ou de polyamines, présentant un poids moléculaire de 60-500 g/mole et une fonctionnalité moyenne de 2 à 8 comme agent d'allongement de chaîne/réticulant,
D) de catalyseurs,
E) le cas échéant d'autres adjuvants et additifs,
**caractérisées en ce que** le composant A) présente une teneur en diisocyanate monomère inférieure à 0,5% en poids, une viscosité, mesurée selon la norme DIN EN ISO 3219, d'au maximum 30.000 mPa.s à 20°C et une fonctionnalité NCO moyenne de 2,2 à < 2,5 et il s'agit, pour les composés organiques à fonctionnalité isocyanate A), de mélanges de 35 à 95% en poids d'au moins un polyisocyanate a-1), préparé à partir d'au moins un diisocyanatealiphatique linéaire et présentant une teneur en NCO de 10 à 28% en poids, et de 5 à 65% en poids d'au moins un polyisocyanate a-2), préparé à partir d'au moins un diisocyanatecycloaliphatique et présentant une teneur en NCO de 10 à 22% en poids, et **en ce que**, dans le mélange de polyisocyanates, au moins un des polyisocyanates a-1) et a-2) présente une fonctionnalité NCO moyenne ≤ 2,6 et se trouve en une quantité d'au moins 30% en poids, par rapport à A).

2. Pièces façonnées compactes, résistant à la lumière, polyuréthane selon la revendication 1, **caractérisées en ce que** les polyols B) présentent une fonctionnalité moyenne de 2 à 6.

3. Pièces façonnées compactes, résistant à la lumière, de polyuréthane selon la revendication 1, **caractérisées en ce que** les polyols et/ou les polyamines C) en tant qu'agent d'allongement de chaîne/réticulant présentent une fonctionnalité moyenne de 2 à 4.

4. Pièces façonnées compactes, résistant à la lumière en polyuréthane selon la revendication 1, présentant une dureté Shore A, mesurée selon la norme DIN 53505, de 75 à 85.

5. Pièces façonnées compactes, résistant à la lumière, de polyuréthane selon la revendication 1, **caractérisées en ce que** dans le mélange de polyisocyanates A), au moins un des polyisocyanates a-1) et a-2) présente une fonctionnalité moyenne ≤ 2,5.

6. Pièces façonnées compactes, résistant à la lumière, de polyuréthane selon la revendication 1, **caractérisées en ce que** dans le mélange de polyisocyanates A), au moins un des polyisocyanates a-1) et a-2) présente une fonctionnalité moyenne ≤ 2,4.

7. Utilisation des pièces façonnées selon les revendications 1 à 6 comme revêtement de tableaux de bord et de consoles, comme revêtement de portes et de rangements dans le domaine des véhicules, comme enveloppes de vitres de voitures, comme enveloppes de fenêtres, comme enveloppes de modules solaires, comme enveloppes de bords de table et comme enveloppes de supports ou d'inserts métalliques.

8. Procédé pour la fabrication des pièces façonnées selon les revendications 1 à 6 par le procédé de moulage réactionnel par injection (RIM - Reaction Injection Molding) ou par application directe du mélange des composants A) à E) sur des supports en polycarbonate, en mélanges de polycarbonate, en polyuréthanes aromatiques ou en matériaux synthétiques moulés par injection dans le procédé de Direct Skinning.
